# EUROPEAN PATENT APPLICATION

(11) **EP 1 930 236 A1**
(43) Date of publication of application: **11.06.2008**
(21) Application number: 07001663.9
(22) Date of filing: 26.01.2007
(51) Int. Cl.: B62M 3/00

(54) **Drive cranks and bicycle provided with the same**

(30) Priority: 07.12.2006 CN 200620149793 U
(71) Applicant: Yuan, Chin-Chien, TAIWAN T'ai pei 252 (TW)
(72) Inventor: Yuan, Chin-Chien, TAIWAN T'ai pei 252 (TW)
(74) Representative: Schwarz, Thomas

(57) **Abstract**

This invention provides an effort-saving bicycle with drive cranks, including a bicycle frame (6), a pair of wheels (7), a gear drive (2), a handlebar (8), a saddle (9) and a pair of pedals (4). A pair of drive cranks (11) is disposed between the pair of pedals (4) and the gear drive (2). Each of the drive cranks (11) has a first end (111) and a second end (112). The first end (111) of each of the drive cranks (11) is pivotally connected to a drive shaft (3) of the gear drive (2), and the second end (112) of each of the drive cranks (11) is pivotally connected to one of the pedals (4). An inner circumference and an outer circumference of the first end (111) of each of the drive cranks (11) outwardly and radially bend a respective angle so as to extend to the second end (112) thereof, which is pivotally connected to one of the pedals (4), the respective angle formed by bending the inner circumference is smaller than that formed by bending the outer circumference.

## Description

### BACKGROUND OF THE INVENTION

### Field of the Invention

The present invention relates to an effort-saving bicycle having drive cranks, and more particularly, to a bicycle having effort-saving drive cranks.

### Description of the Prior Art

Being convenient and economical, bicycles have been widely used for transportation for more than a century. Nowadays, they become a convenient means of transportation. By exerting forces on pedals, roller chains actuate the rotation of bicycle wheels, propelling the bicycle forward. Nowadays, nothing can replace bicycles as a means for leisure entertainment and sports. With continuous change of technology, life is doomed to change and so is the environment in the future. Despite all these changes, environmental bicycles continue to bring fun and convenience to our everyday life.

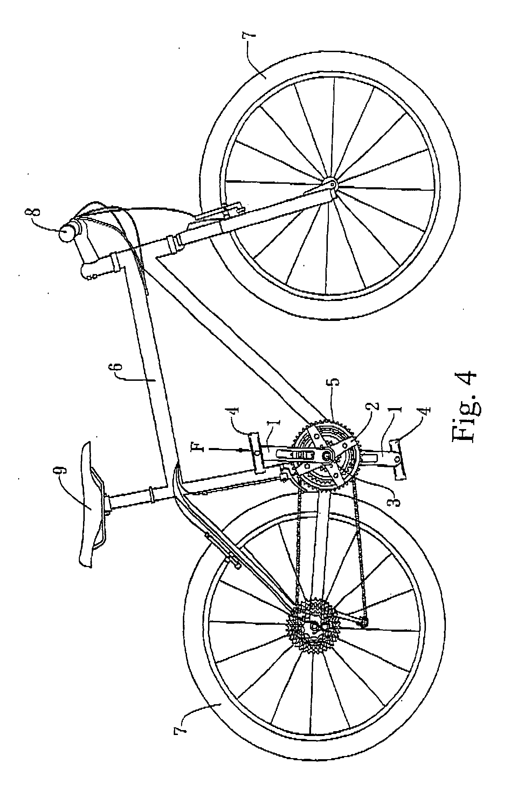

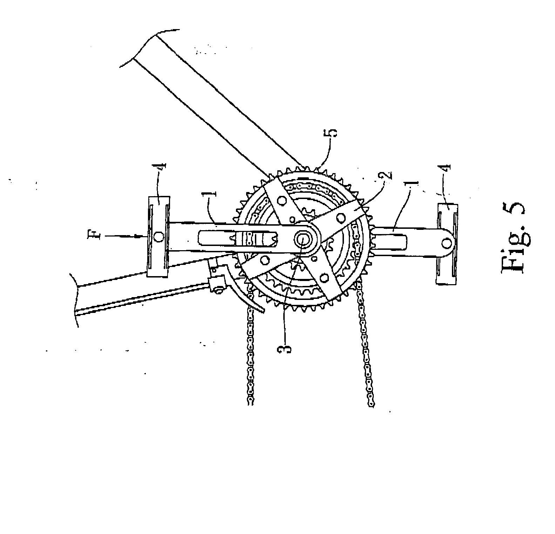

Referring to Fig. 4 and Fig. 5, which respectively show a side perspective view of the conventional bicycle and a partial enlarged view of the cranks and pedals of the conventional bicycle, in which the crank 1 is linearly configured. One end of the crank 1 is pivotally connected to a drive shaft 3 of a gear drive 2 such that when stepping on pedals 4, the crank 1 turns the drive shaft 3, and transmitting motive power to a front drive gear 5 and thus driving the bicycle. The motive power output by the conventional crank 1 actuates the rotation of the front drive gear 5 via the drive shaft 3 as a form of effort-wasting leverage. However, when the pedal 4 passes through an upper dead point (that is, the highest point of the pedal 4) through circumferential movements, the point (dead point) of applying force on the pedal 4 and the conventional crank 1 are simultaneously positioned linearly relative to the drive shaft 3, and under this situation the force exerted on the pedal 4 (denoted by F) is maximized. Because the force F, the conventional crank 1 and the drive shaft 3 become a linear relationship from the top to the bottom, under this situation that the maximum force is exerted on the dead point, the torque of the leverage is equal to zero. In this way, the cyclist's legs exert maximum force on the pedals 4, but minimum mechanical power is generated. Therefore, when the circumferential bicycle movements are repeated, the cyclist's legs repeatedly exert the instantaneous maximum force on the pedals 4, and thus getting tired easily. To drive the bicycle forward, the cyclist's legs need to practice pedaling movements repeatedly. However, with repeated circumferential movements, the dead point where the instantaneous maximum force is exerted is repeatedly reached, thus making the cyclist's leg muscles easily fatigue. Therefore, the conventional bicycle transmission system easily losses mechanical power, and resulting in great differences of the force exerted by the cyclist's legs. Such force differences make the cyclist fatigue, and hence lowering the efficiency of cycling.

To overcome the above problems, Taiwan Patent Application No. 94202795 entitled "Easy-to-pedal Bike and Its Drive Crank", which was invented by the inventor of the present invention, provides a bicycle having an effort-saving drive crank.

The aforesaid patent application includes a pair of drive cranks, each of which having a first end and a second end. The drive cranks are respectively installed on a bicycle such that they save the cyclist's effort when pedaling the bicycle. An inner circumference and an outer circumference of the first end of each of the drive cranks outwardly and radially bend an angle so as to extend to the second end to form a bent portion. The torque generated by the effective moment arm provided by the bent portion and exerted on the drive shaft can effectively improve the design of the conventional bicycle, which is effort-wasting.

Accordingly, it is important to develop a more effort-saving bicycle with an improved bent portion structure such that not only the drive crank is not easily damaged or broken, but also it has an aesthetic appearance with diverse variations for providing more options and funs to the cyclists.

### SUMMARY OF THE INVENTION

The primary objective of the present invention is to provide an effort-saving bicycle having a pair of drive cranks each of which having a first end with an inner circumference and an outer circumference outwardly and radially bending a respective angle so as to extend to a second end thereof, and the respective angle formed by bending the inner circumference is smaller than that formed by bending the outer circumference, and the pair of the drive cranks also provides an aesthetic appearance and strength-enhancing effect.

To achieve the above objective, the effort-saving bicycle of the present invention includes a bicycle frame, a pair of wheels, a gear drive, a handlebar, a saddle and a pair of pedals. A pair of drive cranks is disposed between the pair of the pedals and the gear drive. Each of the drive cranks has a first end and a second end, and the first end of each of the drive cranks is pivotally connected to a drive shaft of the gear drive, and the second end of each of the pair of the drive cranks is pivotally connected to one of the pedals, respectively. An inner circumference and an outer circumference of the first end of each of the pair of the drive cranks outwardly and radially bend a respective angle so as to extend to the second end thereof, which is pivotally connected to one of the pedals. The respective angle formed by bending the inner circumference is smaller than that formed by bending the outer circumference.

It is preferable that the drive crank is provided with a hole at a predetermined location thereof.

It is preferable that the present effort-saving bicycle further comprises a bolt by which passes through the hole, the drive crank is locked on the gear drive.

It is preferable that the drive crank is configured in a bent fan-shape.

Another objective of the present invention is to provide a drive crank having a first end and a second end, in which an inner circumference and an outer circumference of the first end outwardly and radially bend a respective angle so as to extend to the second end, the respective angle formed by bending the inner circumference is smaller than that formed by bending the outer circumference, and the drive crank also provides aesthetic effect.

### BRIEF DESCRIPTION OF THE DRAWINGS

Fig. 1 shows a side perspective view of an effort-saving bicycle according to the present invention.
Fig. 2 shows a partial enlarged view of drive cranks and pedals of the effort-saving bicycle of Fig. 1.
Fig. 3 is a schematic view showing a torque generated on a moment arm by a force exerted on the pedal according to the present invention.
Fig. 4 shows a side perspective view of a conventional bicycle.
Fig. 5 shows an enlarged view of the crank and the pedals of the conventional bicycle of Fig. 4.

### DETAILED DESCRIPTION OF THE PREFERRED EMBODIMENTS

While the invention has been described by way of examples and in terms of preferred embodiments, it is to be understood that those who are familiar with the subject art can carry out various modifications and similar arrangements and procedures described in the present invention and also achieve the effectiveness of the present invention. Hence, it is to be understood that the description of the present invention should be accorded with the broadest interpretation to those who are familiar with the subject art, and the invention is not limited thereto.

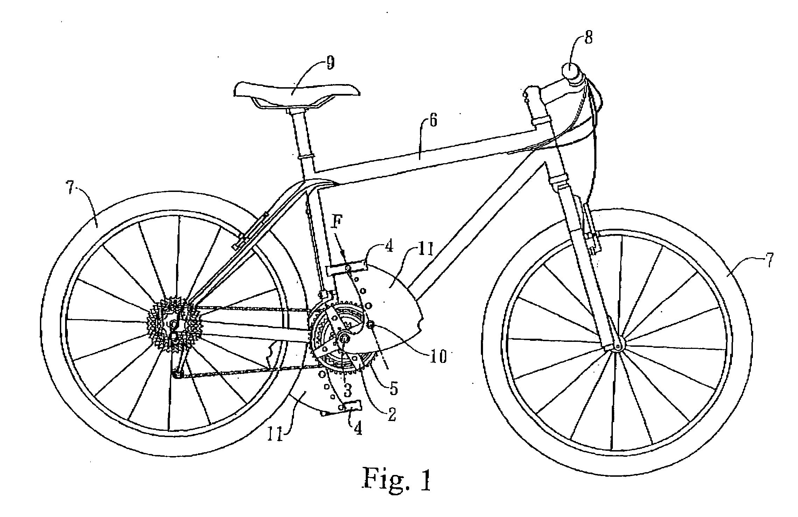

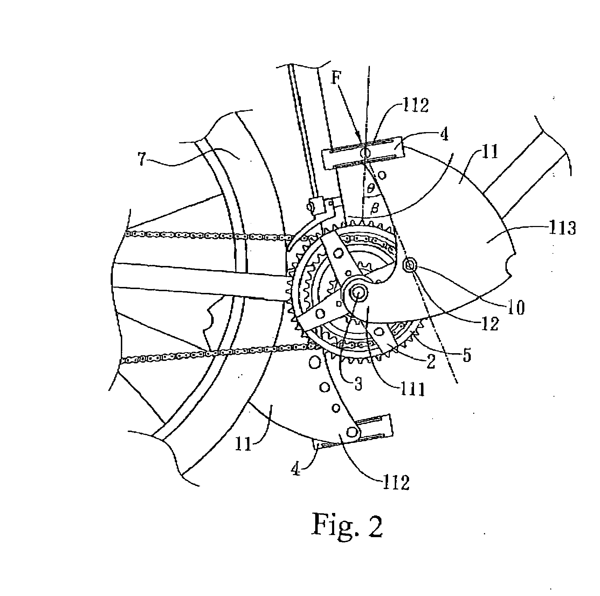

Referring to Fig. 1 and Fig. 2, which respectively show the side perspective view and the partial enlarged view of the drive crank 11 and the pedals 4 of the effort-saving bicycle of the present invention, the effort-saving bicycle of the present invention includes: a bicycle frame 6; a pair of wheels 7 pivotally disposed at a front end and a rear end of a lower side of the bicycle frame 6, respectively; a gear drive 2 pivotally disposed near a middle portion of the lower side of the bicycle frame 6; a handlebar 8 installed on a front end of an upper side of the bicycle frame 6; a saddle 9 installed near a middle portion of the upper side of the bicycle frame 6; a pair of drive cranks 11, each of which having a first end 111 and a second end 112, wherein the first end 111 is pivotally connected to a drive shaft 3 of the gear drive 2; and a pair of pedals, each of which pivotally connected to one of the second ends 112 of the pair of the drive cranks 11.

Referring to Fig. 2, each of the drive cranks 11 is designed in a bent fan-shape. An inner circumference and an outer circumference of the first end 111 thereof outwardly and radially bend a respective angle so as to extend to the second end 112 to form a bent portion 113, which is disposed between the first end 111 and the second end 112. The respective angle θ is formed by bending the inner circumference and the respective angle β is formed by bending the outer circumference. The respective angle β is larger than the respective angle θ. The bent portion 113 can enhance the strength of the drive cranks 11 such that the drive cranks 11 are not easily broken. The bent portion 113 is provided with a hole 12 at a pre-determined location thereof. By employing a bolt passing through the hole 12, each of the drive crank 11 is locked on the gear drive 2.

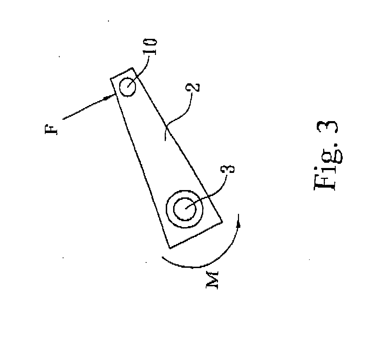

Referring to Fig. 3 accompanying with Fig. 2, in which Fig. 3 shows a torque generated on a moment arm by a force F exerted on the pedal 4. When practicing circumferential movement on each of the pedals 4, the force (denoted by F) exerted on each of the pedals 4 will act on the moment arm formed by the drive shaft 3 and the bolt 10. The force F acts on the location of the bolt 10 (or the hole 12) along the direction of force (see the dotted line of Fig. 2). At that time, a torque will be generated at the drive shaft 3. The force F exerted on each of the pedals 4 is transmitted to the bolt 10 to actuate the rotation of the gear drive 2 (or a front drive gear 5), thus pushing the bicycle to move forward. The motive power output by the bolt 10 directly actuates the rotation of the gear drive 2 (or the front drive gear 5) as a form of effort-saving leverage, which can lower the consumption of motive force and prevent the cyclist from getting tired, thus enhancing the efficiency of cycling.

The advantages of the present invention are: (1) the bicycle becomes more effort-saving by lengthening effective moment arms to obtain more motive force; (2) the drive crank is designed in a bent fan-shape to enhance the strength thereof such that the drive crank is not easily broken; and (3) the drive rank is designed to have aesthetic appeal and much diversification such that the cyclist has more options and more funs.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An effort-saving bicycle, comprising a bicycle frame (6), a pair of wheels (7), a gear drive (2), a handlebar (8), a saddle (9) and a pair of pedals (4), which is **characterized in that**:
a pair of drive cranks (11) is disposed between the pair of said pedals (4) and said gear drive (2), each of said drive cranks (11) has a first end (111) and a second end (112), said first end (111) of each of said drive cranks (11) is pivotally connected to a drive shaft (3) of said gear drive (2), and said second end (112) of each of the pair of said drive cranks (11) is pivotally connected to one of said pedals (4), respectively, and an inner circumference and an outer circumference of said first end (111) of each of the pair of said drive cranks (11) outwardly and radially bend a respective angle so as to extend to said second end (112) thereof, which is pivotally connected to one of said pedals (4), the respective angle formed by bending the inner circumference is smaller than that formed by bending the outer circumference.

2. The effort-saving bicycle as claimed in claim 1, wherein each of said drive cranks (11) is provided with a hole (12) at a predetermined location thereof.

3. The effort-saving bicycle as claimed in claim 2, further comprising a bolt (10) by which passes through said hole (12) of each of said drive cranks (11) such that said drive cranks (11) are locked on said gear drives.

4. The effort-saving bicycle as claimed in claim 1, wherein each of said drive cranks (11) is configured in a bent fan-shape.

5. A drive crank (11) pivotally connected to a drive shaft (3) of a gear drive (2) of a bicycle frame (6), said drive crank (11) comprising a crank body, a first end (111) and a second end (112), wherein an inner circumference and an outer circumference of said first end (111) of said drive crank (11) outwardly and radially bends a respective angle so as to extend to said second end (112) thereof, the respective angle formed by bending the inner circumference is smaller than that formed by bending the outer circumference.

6. The drive crank as claimed in claim 5, wherein said drive crank (11) is provided with a hole (12) at a pre-determined location thereof.

7. The drive crank as claimed in claim 6, further comprising a bolt (10) by which passes through said hole (12) such that said drive crank (11) is locked on said gear drive (2).

8. The drive crank as claimed in claim 5, wherein said drive crank (11) is configured in a bent fan-shape.
